# EUROPEAN PATENT APPLICATION

(11) **EP 2 009 521 A1**
(43) Date of publication of application: **31.12.2008**
(21) Application number: 07012807.9
(22) Date of filing: 29.06.2007
(51) Int. Cl.: G05B 17/02, E06B 9/56

(54) **Method for controlling motorized shading devices and control system**

(71) Applicant: Somfy SAS, 74300 Cluses (FR)
(72) Inventor: Schön, Hendrik, 72070 Tübingen (DE)
(74) Representative: Jakelski, Joachim

(57) **Abstract**

The invention relates to a method for controlling motorized shading devices (20, 22, 24) mounted on a façade (30, 32, 34) of a building (10) based on the radiation (60) of the sun (62) and to a control system for controlling the motorized shading devices (20, 22, 24). The method is characterized in that a future façade radiation intensity (I_{anticip}) is determined based on the determination of façade radiation intensity for a virtual façade oriented a given misalignment angle (Δα,ΔT) more to the east than the real façade (30, 32, 34). The control system comprises means (40, 50, 52, 54) to implement the method. The method and the control system (40, 50, 52, 54) help to reduce energy consumption especially for the cooling of the building (10) without causing discomfort for the occupants.

## Description

### Field of the invention

The invention relates to a method for controlling motorized shading devices and to a control system for such motorized shading devices.

### Background information

Several control systems are well known. Such control systems contain a central control unit, which controls the motorized shading devices based on input signals of associated sensor devices and predefined control algorithms. For example patent application US 2006/0207730 A1 teaches the use of exterior and/or interior photo sensors, detectors for detecting the angle of incidence of the sunlight and/or rain sensors. Furthermore, the control system may take into account parameters such as information about the geographic location, information about date and time and/or information about window/façade orientation.

Patent document EP 1 054 134 B1 discloses the use of meteorological data from external weather stations, which the control system can access via Internet or other communication means.

Patent application DE 10 2005 003102 A1 teaches the use of weather forecast data or data related to the near future temporal evolution of the meteorological conditions.

However, both methods suffer from the general inaccuracy of weather forecasts. This inaccuracy may be related to local variations of the conditions within the coverage of a certain forecast as well as the temporal inaccuracy. As a result the anticipated condition may appear much later or not at all leading to discomfort for the occupants of the building. Furthermore, they are not adapted for taking into account the building surroundings (presence of mountains or other buildings for example).

A. Guillemin and S. Molteni describe in Building and Environment 37 (2002) 1091-1097 ("An energy-efficient controller for shading devices using self-adapting to the user-wishes") the possibility that a control system for shading devices can consider additional parameters. However, the described consideration is limited to the behavior of the occupants and the control system tries to anticipate their wishes. The control system considers neither future parameters nor external parameters, such as meteorological conditions.

Furthermore, it is well known that a control system for shading devices considers variations in the amount of sun radiation, e.g. the passage of clouds, in order that such interference does not affect the motorized shading devices. For the user, the control system reacts with a certain delay time. Patent document FR 2 771 521 B1 discloses such a control system, which tries to adapt such a delayed reaction to the user wishes, based on eventual user reaction in the meantime. The control system divides the movement between two positions of the shading devices into at least two intervals with fractional movements in order to improve user satisfaction. The control system can be trained by the user in order to anticipate the user's preferences. However, also this control system does not reveal an anticipation of external parameters, such as meteorological conditions.

Patent application US 2006/0207730 A1 teaches the use of proactive algorithms by a control system for motorized shading devices. Such algorithms may take into account the patterns of use of the shading devices by the building's occupants. Furthermore, the operation of the shading devices may be based on a scenario for a typical day, e.g. a worst case bright day. However, this control method suffers that the identification of the typical day scenario is quite difficult and that the control method does not adapt during the day to possible changes. This could lead to potential discomfort for the occupants.

Another possibility of trying to anticipate the reaction of motorized shading devices is the modification of the threshold values, which are established for the comparison with the radiation. However, in practice these methods often lead to user discomfort at days with rather constant radiation levels above the modified threshold, e.g. foggy days or situations of white sky. The threshold modification leads to the lowering of shading devices, although the user would prefer them to be open in order to make use of the natural light.

As shown, most of well known control systems for motorized shading devices do simply react to the external conditions, which are detected by the associated sensing devices. For example, shading devices related to a certain window or façade will be lowered once a value for the radiation on a given window or façade exceeds a predefined threshold value.

In contrast to this behavior, it can be advantageous if the control system for motorized shading devices actively initiates actions already before a certain condition is reached. This can be of considerable importance in order to reduce solar gains in summer in order to prevent overheating respectively in order to limit the necessary cooling energy demand. Consequently, a smart control system for shading devices should already anticipate a certain condition in order to operate the shading devices before such a condition is reached. This would allow energy savings without diminishing comfort level of the occupants.

It is therefore an object of the invention to overcome the above mentioned limitations and to improve a method for controlling motorized shading devices and/or a control system for such shading devices, i.e. to "anticipate" certain external parameters, especially solar radiation levels and potential solar gains, with high precision in order to minimize discomfort for the occupants and/or in order to save energy.

### Summary of the Invention

The objects are accomplished by the method for controlling shading devices and/or the control system for such shading devices according to the features of the independent claims.

The method for controlling motorized shading devices mounted on a façade of a building based on a radiation intensity according to the invention is characterized in that a future radiation intensity is determined for a virtual façade, which is oriented a misalignment angle more to the east than the real façade.

Therefore the inventive method allows the beforehand detection of illumination levels on the associated façade. Consequently, the anticipatory radiation intensity, respectively the future radiation intensity can be taken into account in order to operate the shading devices of the façade with regard to optimized energy consumption by unchanging occupant comfort.

According to one embodiment the future radiation intensity is determined by the signal of at least one radiation sensor mounted with the misalignment angle compared to the associated façade.

According to another embodiment the future radiation intensity is calculated, based on the global radiation, on data characterizing the orientation of the façade and the position of the sun. The position of the sun is preferably calculated from the time and preferably the date and preferably the geographical location of the building.

A particularly advantageous embodiment provides that the misalignment angle is adjustable. That misalignment angle preferably can be adjusted to different values for different façades. Advantageously the misalignment angle depends on the date and/or time. Preferably different misalignment angles are used for an appearance and for a disappearance of the sun during the day.

According to one embodiment, the controlling of the shading device depends on a threshold level. The control of the shading devices is preferably delayed for a delay time after surpassing the threshold level. Particularly the threshold level will be changed to a lower threshold level at disappearance of the radiation, whereby the control of the shading devices is preferably delayed for a new delay time after surpassing the lowered threshold level. Particularly the threshold level or the lower threshold level and/or the delay time or the new delay time preferably depends on the date and/or time and/or the geographical location.

According to one embodiment the misalignment angle is changed to an optimized misalignment angle depending on the cooling energy demand and the lighting energy demand of the building in order to get an overall minimized energy consumption.

The inventive control system comprises means to implement the inventive method. Particularly the inventive control system comprises at least one radiation sensor being associated to the façade, which is orientated towards east compared to the orientation of the associated real façade. Alternatively the inventive control system comprises one radiation sensor for the global radiation, whereby the control system controls the at least one shading device again depending on the global radiation, on data characterizing the orientation of the façade and on the current position of the sun.

According to one embodiment the radiation sensor comprises means for energy harvesting and/or means for energy storage. These features facilitate the connection of the radiation sensor. If the radiation sensor comprises additionally means for wireless signal communication, then the radiation sensor needs no wired connection.

According to one embodiment the radiation sensor is mounted on a support, which is inclined for the misalignment angle. According to another embodiment the sensing device of the radiation sensor can be rotated around an axis for the misalignment angle. According to a further embodiment the sensing device of the radiation sensor can be moved along a path in order to achieve the misalignment angle.

Further advantageous embodiments of the method for controlling shading devices and/or the control system for such shading devices according to the invention are shown in the drawing and are exemplified by the following description.

### Brief description of the drawing

- Fig. 1:: Schematic drawing of a prior art control system for shading devices related to three façades with associated radiation sensors,
- Fig. 2:: Schematic drawing of an inventive control system for shading devices related to three façades with associated radiation sensors,
- Fig. 3a:: Schematic drawing of a sensor station with radiation sensors associated to different façades based on prior art,
- Fig. 3b:: Schematic drawing of a sensor station with radiation sensors associated to different façades according to the invention,
- Fig. 4a:: Schematic drawing of a first embodiment of a radiation sensor according to the invention,
- Fig. 4b:: Schematic drawing of a second embodiment of a radiation sensor according to the invention,
- Fig. 4c:: Schematic drawing of a further embodiment of a radiation sensor according to the invention,
- Fig. 5:: Sun path diagram for one day showing that solar radiation will reach a radiation sensor mounted in real façade orientation later than a radiation sensor mounted in modified façade orientation misaligned by a misalignment angle to the east,
- Fig. 6:: Course of a real west oriented façade radiation intensity in comparison with the façade radiation intensity of a virtual façade, oriented slightly east compared to the orientation of the real façade, which anticipates the future level of radiation on the real façade in a certain period of time,
- Fig 7:: Course of a real west oriented façade radiation intensity in comparison with the façade radiation intensity of a virtual façade, oriented slightly east compared to the orientation of the real façade, which anticipates the future level of radiation on the real façade, shown with a modified delay time,
- Fig. 8:: Course of a real west oriented façade radiation intensity in comparison with the façade radiation intensity of a virtual façade, oriented slightly east compared to the orientation of the real façade, which anticipates the future level of radiation on the real façade, shown with a modified threshold level,
- Fig. 9:: Simulated cooling energy demand during summer for a building at different geographical locations based on a state-off-the art control system and a control system based on the present invention and
- Fig. 10:: Simulation of the total energy demand for lighting and cooling of a building during summer as a function of the misalignment angle.

### Detailed description

The following description explains the invention based on some preferred embodiments however without limiting the invention to the presented embodiments.

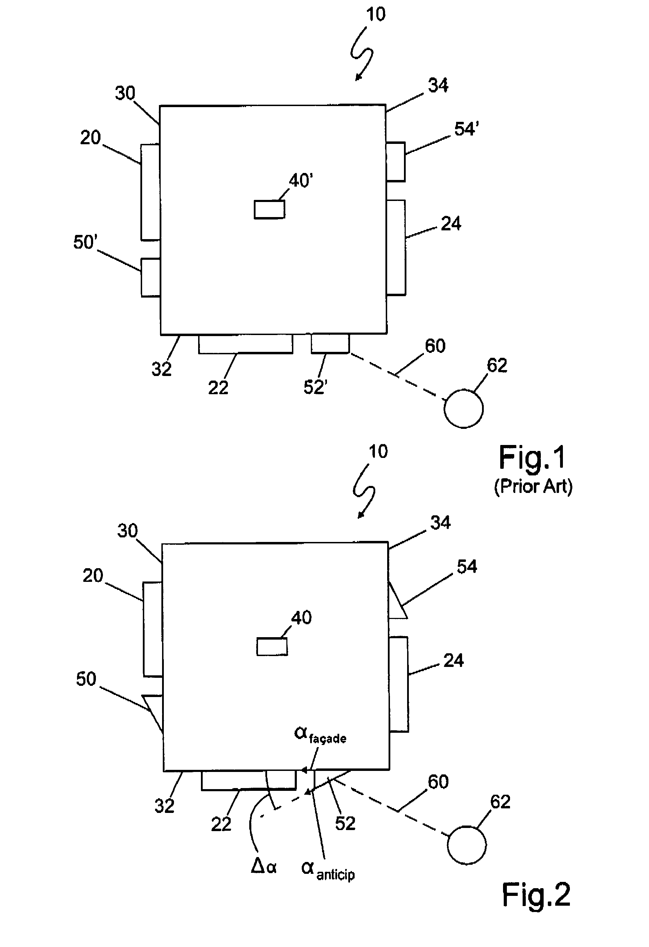

Figure 1 shows schematically a prior art control system for shading devices related to three façades of a building 10 viewed from above. However, the shown and described components and arrangements are the basis of the invention as well. In this known example, the control of three motorized shading devices 20, 22, 24 associated to three façades 30, 32, 34 is described, but the general concept can be applied to less as well as to more shading devices 20, 22, 24 with different orientations. Also the number of shading devices 20, 22, 24 per façade 30, 32, 34 may vary.

The known control system for the building 10 comprises a control unit 40', which manages the operation of the shading devices 20, 22, 24. The control unit 40' may communicate with the not shown actuators of the shading devices 20, 22, 24 via hardwired or wireless connections. The communication may be unidirectional or bidirectional. The known control system comprises further at least one radiation sensor 50', 52', 54', which is illuminated by the solar radiation 60 emanated from the sun 62. Preferably each façade 30, 32, 34 is associated with at least one radiation sensor 50', 52', 54'.

The known control unit 40' receives information of the current radiation level on the façade 30, 32, 34 from the at least one radiation sensor 50', 52', 54' associated to the respective façade 30, 32, 34. The radiation sensor 50', 52'. 54' may send information of the absolute or relative radiation intensity or level respectively the absolute or relative illumination intensity or level, which can be compared to a predefined, adjustable threshold level. Based on the information on the radiation intensity on the respective façade 30, 32, 34 and preferably at least one further external parameter, the control algorithm implemented in the known control unit 40' manages the operation of the shading device 20, 22, 24. For example, the known control unit 40' initiates the closing of shading device 22 if the radiation sensor 52' detects, that the current radiation intensity at the façade 32 exceeds a given threshold level, i.e. the prior art control system 40', 50', 52', 54' reacts to the current condition at the façade 30, 32, 34.

Information about additional external parameters may be supplied to the prior art control unit 40' as well as to the control system according to the invention by one or more of the following sensors : interior photo sensors, which detect the internal radiation inside at least one room of the building 10, sensors for detecting the angle of incidence of the radiation 60, twilight sensors, precipitation sensors, interior and/or exterior temperature sensors, pollution sensors, air quality sensors, wind sensors, occupancy sensors, noise sensors. Furthermore, the prior art control system 40', 50', 52', 54' as well as the control system according to the invention may take into account one or more parameters such as the geographic location information, date and time information, day-night cycles, building construction information, internal heat load information, occupant behavior information, window/façade orientation information. This listing of sensors and external parameters is exemplary and those skilled in the art may use further sensors or parameters to control the at least one shading device 20, 22, 24.

The inventive control systems and methods overcome the limitations of the reactive behavior of the described prior art control system 40', 50', 52', 54' shown in Figure 1.

The control system according to the invention anticipates in a more sensitive way the future radiation level at the façade 30, 32, 34 and uses this information to manage the operation of the motorized shading devices 20, 22, 24 at the corresponding façade 30, 32, 34. The time period of the anticipation may range from several seconds to a couple of hours. The time period of the anticipation should be long enough for closing the shading device 22, 22, 24, e.g. the range can start with 20 or 30 seconds. The anticipation especially allows taking into account future solar radiation 60 gains for the control of the shading devices 20, 22, 24. This results advantageously in the reduction of cooling energy demand in summer.

Figure 2 shows an embodiment of a control system for motorized shading devices 20, 22, 24 according to the invention, In this example, the control of three shading devices 20, 22, 24 on three façades 30, 32, 34 as described in relation with Figure 1 is presented.

The façades 30, 32, 34 of the building 10 are hit by the solar radiation 60 emanated by the sun 62. The inventive control unit 40 receives information about the radiation intensity from at least one inventive radiation sensor 50, 52, 54 associated to the respective façades 30, 32, 34, where the sensor sensing surfaces are parallel to the respective façade. The orientation of the at least one radiation sensor 50, 52, 54 is slightly rotated to the east of the orientation of the façade 30, 32, 34 to a modified façade orientation α_{anticip}, i.e. is willfully misaligned by a misalignment angle Δα compared to the real façade orientation α_{façade}. That means it measures the façade radiation intensity at the virtual façade, representing the future façade radiation intensity I_{anticiP} at the façade 30, 32, 34. Consequently, the façade radiation intensity at the radiation sensor 50, 52, 54 due to the radiation 60 will increase and decrease in the course of the day earlier compared to the real façade radiation intensity I_{façade}. As a result of this, the at least one radiation sensor 50, 52, 54 determines the future façade radiation intensity I_{anticip} at the façades 30, 32, 34. The misalignment angle Δα corresponds to a time period ΔT depending on the season respectively date, geographical position of the building 10 and/or the orientation of the façades 30, 32, 34. The misaligned radiation sensor 50, 52, 54 sends information about the absolute or relative future façade radiation intensity I_{anticip}, which can be compared with a predefined, adjustable threshold level Iₜₕᵣₑₛ in the control unit 40. The comparison alternatively can take place in the radiation sensor 50, 52, 54.

Based on the information about the future façade radiation intensity I_{anticip} on the respective façade 30, 32, 34 and preferably about at least one further external parameter the control unit 40 manages the operation of the shading device 20, 22, 24. For example, the control unit 40 initiates the closing of shading device 22 if the misaligned radiation sensor 52 detects that the future façade radiation intensity I_{anticip} at the façade 32 exceeds the threshold level Iₜₕᵣₑₛ, i.e. the control system 40, 50, 52, 54 anticipates a high or low future façade radiation intensity I_{anticip} for the façades 30, 32, 34 in the near future, respectively in the time period ΔT, and limits or increases solar gains in advance. This allows the reduction of cooling energy demand or heating energy demand of the building 10 in the future. At the same time, the comfort for the occupants of the building 10 will not be diminished.

Compared to the use of weather forecast data, the invention makes use of real measured values. The inaccuracy within the anticipation of the conditions at the real façades 30, 32, 34 is mainly given by the possibility of radiation changes within the time period ΔT, respectively within the range of the misalignment angle Δα. By choosing an adequate misalignment angle Δα, the risk of faulty operation of the shading devices 20, 22, 24 due to faulty anticipation can be limited to very low values.

The radiation sensors 50, 52, 54 may be mounted directly on the respective façades 30, 32, 34 or at a different location with the desired orientation, e.g. in a sensor station on top of the building 10. It may be advantageous to assign one radiation sensor 50, 52, 54 to each different façades 30, 32, 34 or to assign several radiation sensors 50, 52, 54 to different parts of a façades 30, 32, 34 with a single orientation. Preferably, the radiation sensor 50, 52, 54 will contain means for autonomous energy supply and/or a means for wireless communication.

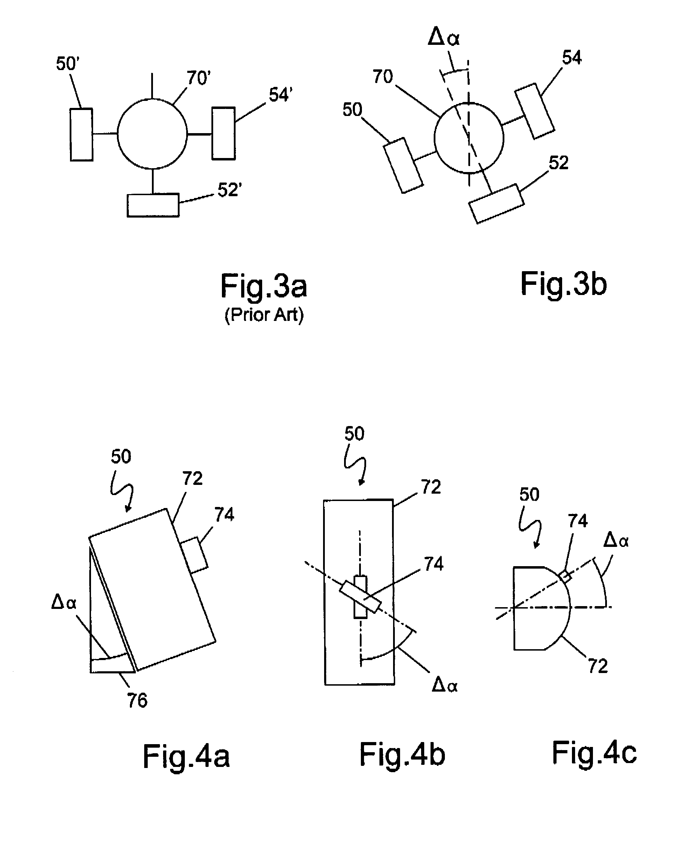

Figure 3a shows a schematic drawing of a sensor station with radiation sensors 50', 52', 54' associated to different façades 30, 32, 34 based on prior art and Figure 3b shows a schematic drawing of a sensor station of radiation sensors 50, 52, 54 according to the invention.

The known radiation sensors 50', 52', 54' are mounted on a sensor mast 70' of the sensor station. The different radiation sensors 50', 52', 54' are oriented in accordance with the façade orientations. For a similar sensor station based on the invention, the radiation sensors 50, 52, 54 preferably are mounted on such a sensor mast 70 and their orientation is tilted by the misalignment angle Δα compared to the façades orientations. The schematic drawing in Figure 3b shows an embodiment with the same misalignment angle Δα for all radiation sensors 50, 52, 54. However, those skilled in the art may identify solutions, where the misalignment angle Δα is optimized for different orientations and consequently differs for the various radiation sensors 50, 52, 54. Furthermore, it can be advantageous if the misalignment angle Δα can be freely modified. The misalignment angle Δα will be found for example by experiments. The misalignment angle Δα can also be found by calculations or simulations or an optimization process. The calculations or simulations can be based on at least one parameter of the building 10 and for example time. The optimization can be based for example on the energy saving.

Figures 4a, 4b and 4c show three embodiments of a radiation sensor 50 according to the inventive control system 40, 50, 42, 54 viewed form above. The radiation sensor 50 can be mounted on the façades 30, 32, 34 and the misalignment angle Δα can be achieved by different means shown in Figures 4a, 4b, 4c. The radiation sensor 50 consists of at least a housing 72 and a sensing device 74. The sensing device 74 is preferably a photo-diode or a photo-resistance or a solar cell or a phototransistor. The radiation sensor 50 may also contain electronics for evaluating the input of the sensing device 74 and means for transmission of signals to the control unit 40 and/or means for comparisons of signals. The transmission of signals may be wireless.

Figure 4a shows an embodiment, where the radiation sensor 50 is mounted on an inclined support 76. The support 76 is built in such a way, that the orientation of the sensing device 74 will be misaligned to the façades orientation by the misalignment angle Δα. It is possible, that the support 76 is integrated in the housing 72 of the radiation sensor 50. Furthermore, the misalignment angle Δα is preferably adjustable and the support 76 contains visible information, such as graduations, for the installer to install the radiation sensor 50, 52, 54 with the given misalignment angle Δα, which can be in a range of 0° - 30° for example.

Figure 4b shows a second embodiment of a radiation sensor 50 consisting of at least the housing 72 and the sensing device 74. Here, the sensing device 74 can be rotated around an axis in order to achieve the misalignment angle Δα between the sensing device 74 and the orientation of the façades 30, 32, 34. Again, the radiation sensor 50 may contain visible information for the installer to install the radiation sensor 50 with the given misalignment angle Δα.

Figure 4c shows a further embodiment of a radiation sensor 50 consisting of at least the housing 72 and the sensing device 74. Here, the sensing device 74 can be moved along a path in order to achieve the misalignment angle Δα between the sensing device 74 and the orientation of the façades 30, 32, 34.

Obviously, many modifications and variations of the above described radiation sensors 50, 52, 54 and sensor stations are possible in the light of the above teachings for those skilled in the art. Those should be seen within the scope of the invention.

The control system 40, 50, 52, 54 may also allow in addition to the automated control of the shading devices 20, 22, 24 the possibility of local control of these devices 20, 22, 24 by the building occupants.

Furthermore, the control system 40, 50, 52, 54 may take into account the misaligned position of the radiation sensor 50, 52, 54 for the disappearance of the radiation 60, It may be useful to adjust a delay time after the disappearance of the radiation 60 in order to prevent the opening of the shading devices 20, 22, 24, if the future façade radiation intensity I_{anticip} determined by the "misoriented" radiation sensors 50, 52, 54 is below a certain threshold level Iₜₕᵣₑₛ, but the real façade radiation intensity I_{façado} is still higher than the assigned threshold level Iₜₕᵣₑₛ. This delay time may take into account the time and/or date, respectively the season, and/or time period ΔT due to the misalignment.

It is worth to mention that the description of the preferred embodiments has been based on sun position on the Northern Hemisphere of the earth. Those skilled in the art may adapt these descriptions to the situation on the Southern Hemisphere within the spirit of the invention.

According to an embodiment of the invention, the control system 40, 50, 52, 54 for controlling the motorized shading devices 20, 22, 24 contains instead of the "misaligned" at least one radiation sensor 50, 52, 54 means for measuring the global radiation intensity. This global radiation sensor (not shown) provides information about the radiation level due to solar radiation 60 to the control unit 40 of the control system. In addition, the control unit 40 calculates the position of the sun 62 based on the geographical position of the building 10 and preferably the time and preferably the date. Coordinates of façades are also configured in the control system. Using this information, the control unit 40 can determine the time, when the solar radiation 60 hits a façade 30, 32, 34. In order to anticipate the future façade radiation intensity I_{anticip}, the control unit 40 determines the misalignment angle Δα, which is equivalent to the time period ΔT, for an associated virtual façade, which is slightly misaligned for the misalignment angle Δα to the east compared to the real façade orientation. Using this information and a threshold level Iₜₕᵣₑₛ for the measured global radiation intensity, the control system manages the operation of the shading devices 20, 22, 24 at this façades 30, 32, 34. The threshold level Iₜₕᵣₑₛ may also depend on the time and/or date, respectively season. Furthermore, the misalignment angle Δα of the virtual façade used in the calculation may depend on the time and/or date as well.

It may be beneficial to have very small or no misalignment angle Δα during seasons, where radiation gains can be used to reduce the heating energy demand of the building and to use larger misalignment angles Δα during seasons, where solar gains need to be limited in order to limit cooling energy demand of the building 10. On the other hand, when different behaviors of the shading devices 20, 22, 24 are set for the different seasons, for example in winter, solar protections are kept closed during the night and opened during the day and in summer, they are conversely kept opened during the night and closed during the day for an optimum energy efficiency, the invention is in all cases advantageously implemented.

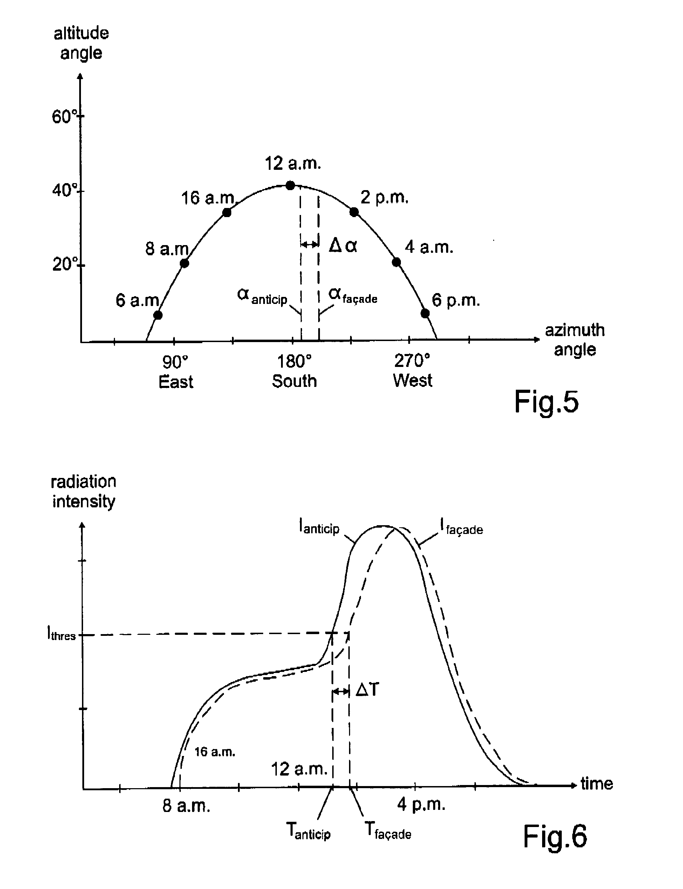

For those skilled in the art it is obvious, that the determination of the relevant time periods ΔT respectively misalignment angles Δα for a given façade 30, 32, 34 does not necessarily need to be done by calculating or defining a virtual, misaligned façade. Other mathematical algorithms may be used within the same conception. Figure 5 shows a sun path diagram for one day, visualizing the above described idea of the invention. Figure 5 illustrates the difference between a radiation sensor 50, 52, 54 oriented in the real façade orientation α_{façade} and a "misaligned" radiation sensor 50, 52, 54 oriented in the modified façade orientation α_{anticip}. The solar radiation 60 reaches the real façade orientation α_{façade} later than it reaches the radiation sensor 50, 52, 54 misaligned by the angle Δα to the east. The latter radiation sensor 50, 52, 54 determines the future façade radiation intensity I_{anticip}. In the embodiment with the global radiation sensor the control unit 40 calculates the future façade radiation intensity I_{anticip} in the already described way.

Figure 6 shows the course of the future radiation intensity level I_{anticip} and the real façade radiation intensity I_{façade} in one day, The threshold level Iₜₕᵣₑₛ for the future façade radiation intensity I_{anticip} is reached at T_{anticip}, whereas the same threshold level Iₜₕᵣₑₛ is reached (as determined by sensors parallel to the real façade 30, 32, 34) at T_{façcade}. This time period AT (AT = T_{façade} - T_{anticip}), respectively time difference, corresponds to the misalignment angle Δα.

It should also be noted that for the same time T_{anticip} of activation of shading devices, threshold level I'ₜₕᵣₑₛ related to the dotted line curve, corresponding to the real façade radiation intensity, is lower than threshold level Iₜₕᵣₑₛ for the virtual façade.

This means that the invention also tends to use higher thresholds, thus improving the prior art systems and increasing the detection sensitivity.

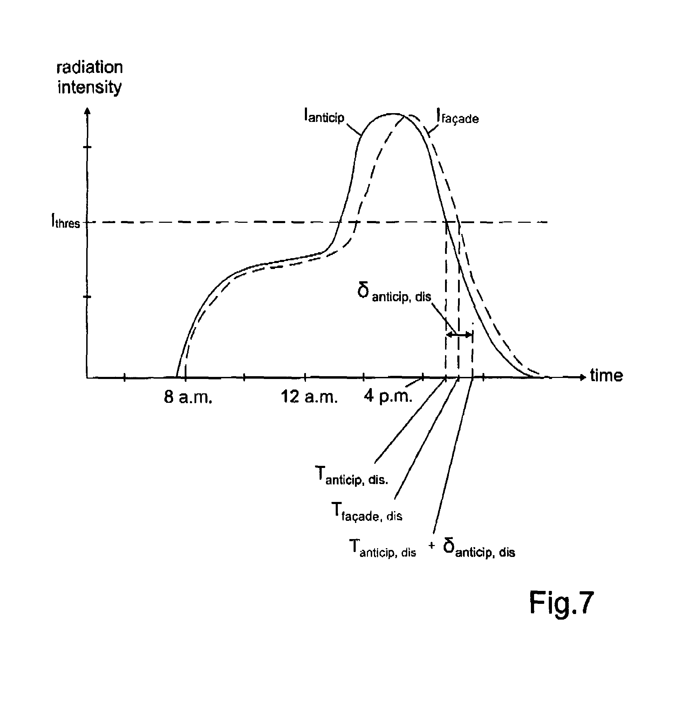

Figure 7 shows again the course of the future radiation intensity level I_{anticip} and the real façade radiation intensity I_{façade} in one day. In case of the disappearance of the radiation 60, which can happen several times per day depending on clouds, the radiation intensity falls below the threshold level Iₜₕᵣₑₛ. This happens at the virtual façade oriented the misalignment angle Δα at T_{anticip, dis,} whereas the same threshold level Iₜₕᵣₑₛ is reached at the real façades 30, 32, 34 at T_{façade, dis-} State-of-the-art control systems will react to the under-running of the threshold level Iₜₕᵣₑₛ after a certain delay time with the de-activation of the shading device 20, 22, 24. In order to ensure proper functioning of the inventive control system 40, 50, 52, 54 the delay time of the anticipating inventive control system 40, 50, 52, 54 should be increased at situations with disappearance of the radiation 60. As a matter of fact, as the disappearance of solar radiation is detected earlier at the virtual façade, it is important not to control movement of the shading devices when the real façade might still be illuminated by the sun radiations. This is schematically shown in Figure 7, where a modified delay time δ_{anticip, dis} has been increased compared to a normal (not shown) delay time. In general, modified delay time δ_{anticip, dis} can be adjusted as function of the geographical position of the building 10 and/or the façade orientation and/or the date and/or the time and/or the misalignment angle Δα and/or similar parameters.

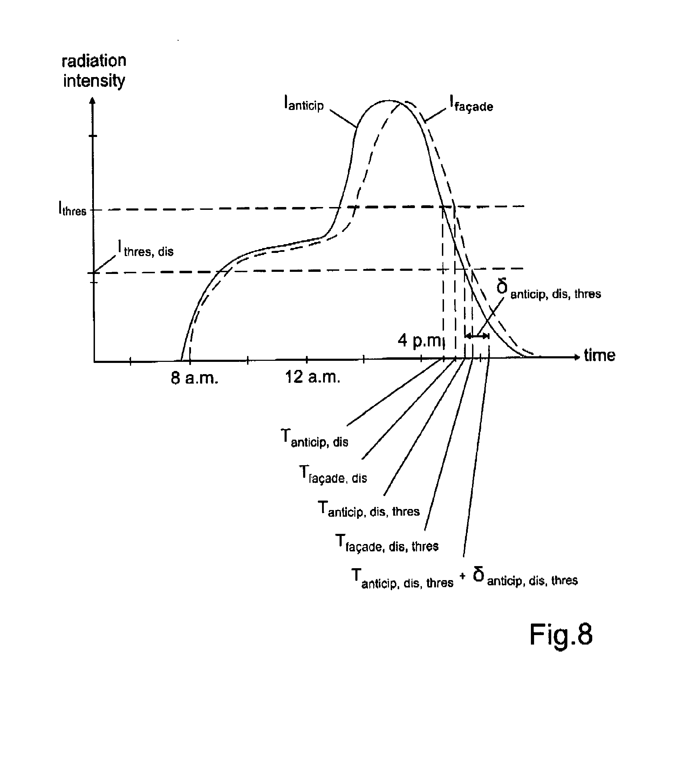

In addition to the adjustment of the modified delay time δ_{anticip, dis} or in replacement thereof, it is also possible to adjust the threshold level Iₜₕᵣₑₛ in order to ensure satisfactory functioning of the control system 40, 50, 52, 54, that means to define a lower threshold level I_{thres, dis} for the disappearance of the radiation 60 compared to the threshold level Iₜₕᵣₑₛ of the appearance of the radiation 60. This is shown schematically in Figure 8. Depending on the lower threshold level I_{thres, dis} it may be necessary to combine the lower threshold level I_{thres, dis} with a further modified delay time δ_{anticip. dis, thres} or not. The further modified delay time δ_{anticip, dis, thres} may be longer or preferably shorter compared with the typical modified delay time δ_{anticip, dis}. Again, the lower threshold level I_{thres, dis} and/or the further modified delay time δ_{anticip, dis, thres} of the inventive control system 40, 50, 52, 54 may be adjusted as function of the geographical position of the building 10 and/or the façade orientation and/or the date and/or the time and/or and similar parameters.

This threshold adjustment has for goal, as previously explained, not to control movement of the shading devices when the real façade might still be illuminated by the sun radiations.

Taking into account a parameter such as time may enable to distinguish between such situations of disappearance of sun at sunset and a situation of disappearance of sun because of clouds. As a matter of fact, in the second case, it is likely that both real and virtual façades receive the same small amount of radiation intensity at the same time. The solar protection may then be controlled without delay.

Using the further embodiment of the control system 40, 50, 52, 54 for shading devices 20, 22, 24 according to the invention, the adjustment of the modified delay time δ_{anticip}, dis or further modified delay time δ_{anticip, dis, thres} can be accomplished in a different way as well. It can be advantageous, to use the calculated future façade radiation intensity I_{anticip} as described above only for the appearance of the radiation 60, but to calculate future façade radiation intensity I_{anticip} for the disappearance of the radiation 60 with modified delay time δ_{anticip, dis}, respectively further modified delay time δ_{anticip, dis, thres}. In this way the real conditions at the façade 30, 32, 34 are taken into account for the de-activation of the shading devices 20, 22, 24, which allows optimizing user comfort.

Again, the lower threshold level I_{thres, die} for the disappearance of the radiation 60 may be chosen different to the threshold level Iₜₕᵣₑₛ for appearance of the radiation 60.

The lower threshold level I_{thres, dis} can alternatively applied to the real façade radiation intensity I_{façade} at the disappearance of the radiation 60 (not shown in Figure 8). In this case the further modified delay time δ_{anticip, dis, thres} can be rather short or can be reduced to zero.

The threshold level Iₜₕᵣₑₛ can be immediately lowered to the lower threshold level I_{thres, dis} after the first surpass of the threshold level Iₜₕᵣₑₛ at the appearance of the radiation 60 and the lower threshold level I_{thres, dis} can be applied to the real façade radiation intensity I_{façade} instead of the future façade radiation intensity I_{anticip} at the disappearance of the radiation 60. In this case, the shading devices 20, 22, 24 are activated after the future façade radiation intensity I_{anticip} has surpassed the threshold level Iₜₕᵣₑₛ. At this time, the real façade radiation intensity I_{façade} can be still below the now applicable lower threshold level I_{thres, dis.} which will lead to the deactivation of the shading devices 20, 22, 24. In order to avoid this situation a minimum activation time T_{act} can be introduced. The control of the shading devices 20, 22, 24 will be only active, when the minimum activation time T_{act} has passed. This minimum activation time T_{act} has to be chosen to ensure that the radiation 60 has already surpassed the lower threshold level I_{thres, dis} at the real surface, after surpassing the threshold level Iₜₕᵣₑₛ at the virtual façade. The minimum activation time T_{act} is equivalent to a delay time and may depend on the time and/or date and/or the geographical location of the building 10.

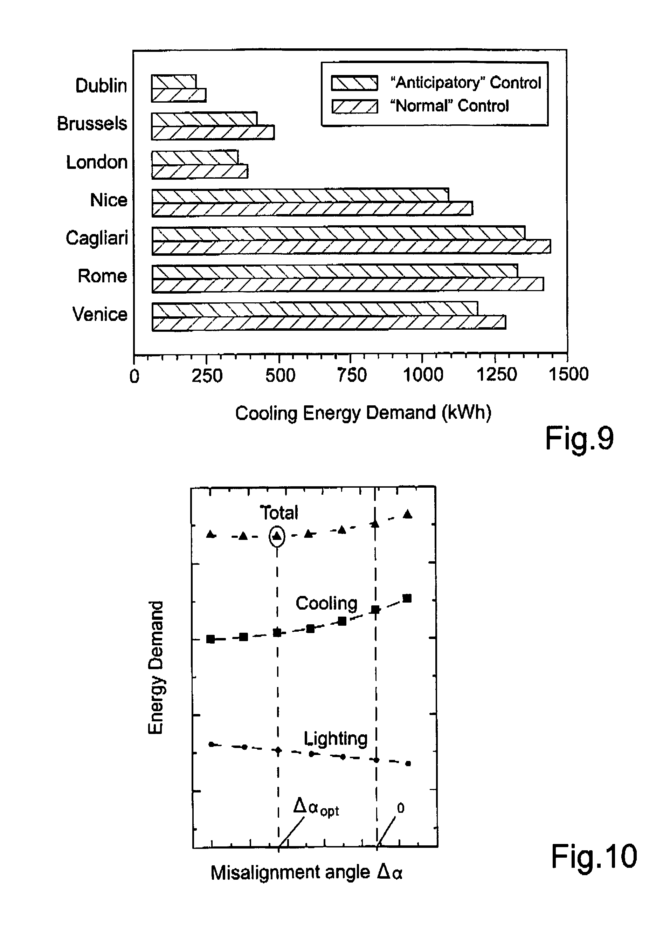

In order to describe the energy saving aspects, the energy demands for an office has been simulated using CAPSOL version 4.0 software developed by PHYSIBEL. Figure 9 shows the simulated cooling energy demand during summer for an office at different European locations. The results for "normal" control systems 40', 50', 52', 54' of shading devices 20, 22, 24 (as described in Figure 1) and an "anticipatory" control system 40, 50, 52, 54 based on the present invention (as described in Figure 2) are compared. Cooling energy demand reductions in the range of 5 % and 15 % can be achieved by using the "anticipatory" control system 40, 50, 52, 54 based on the present invention.

Figure 10 shows the simulation results for the total energy demand for lighting and cooling of an office during summer as a function of the misalignment angle Δα of the radiation sensors 50, 52, 54 compared to the facade orientation. As the lighting energy demand increases with the misalignment angle Δα and the cooling energy demand decreases, an optimum misalignment angle Δαₒₚₜ can be determined for a given building 10.

Consequently, the inventive control system 40, 50, 52, 54 of motorized shading devices 20, 22, 24 described above according to the different embodiments allows the beforehand detection of future façade radiation intensity I_{anticip} on the associated façade 30, 32, 34. This allows the improved management of the operation of shading devices 20, 22, 24 with respect to energy savings and user comfort.

The present invention has been described on the basis of practical examples thereof. Obviously, many modifications and variations of the present invention are possible in the light of the above teachings. It should therefore be understood that, within the scope of the appended claims, the present invention might be practiced otherwise than as specifically described. In particular, individual characteristics of the invention can be employed individually or in combination one with the other.
- 10: building

- 20: shading device
- 21:
- 22: shading device
- 23:
- 24: shading device

- 30: façade
- 31:
- 32: façade
- 33:
- 34: façade

- 40': control unit prior art
- 40: control unit

- 50': radiation sensor prior art
- 50: radiation sensor
- 51:
- 52': radiation sensor prior art
- 52: radiation sensor
- 53:
- 54': radiation sensor prior art
- 54: radiation sensor

- 40,: 50, 52, 54 control system

- 60: solar radiation
- 61:
- 62: sun

- 70': sensor mast prior art
- 70: sensor mast
- 71:
- 72: housing
- 73:
- 74: sensing device
- 75:
- 76: support

- Δα: misalignment angle
- Δαₒₚₜ: optimum misalignment angle
- α_{façade}: real façade orientation
- α_{anticlp}: modified façade orientation
- I_{façade}: real façade radiation intensity
- I_{anticip}: future façade radiation intensity
- ΔT: time period
- Iₜₕᵣₑₛ: threshold level
- I_{thres, dis}: lower threshold level
- δ_{anticip,}: modified delay time
- _{dis} δ_{anticip, dis, thres}: further modified delay time
- T_{façade}:: Time when real façade radiation intensity I_{façade} reaches threshold
- T_{anticip}:: Time when future façade radiation intensity I_{anticip} reaches threshold
- T_{façade, dis}: Time when real façade radiation intensity I_{façade} reaches threshold at disappearance radiation
- T_{anticip, dis}:: Time when future façade radiation intensity I_{anticip} reaches threshold at disappearance radiation
- T_{act}: minimum activation time

## Claims

1. Method for controlling motorized shading devices (20, 22, 24) mounted on a façade (30, 32, 34) of a building (10) based on the radiation (60) of the sun (62), **characterized in that** a future façade radiation intensity (I_{anticip}) is determined based on the determination of façade radiation intensity for a virtual façade, which is oriented a misalignment angle (Δα, ΔT) more to the east than the real façade (30, 32, 34).

2. Method according to claim 1, **characterized in that** the future façade radiation intensity (I_{anticip}) is determined by the signal of at least one radiation sensor (50, 52, 54) mounted with a misalignment angle (Δα) compared to the associated façade (30, 32, 34).

3. Method according to claim 1, **characterized in that** the future façade radiation intensity (I_{anticip}) is calculated, based on the global radiation, on data characterizing the orientation of the façade (30, 32, 34) and on the position of the sun (62).

4. Method according to claim 1, **characterized in that** the misalignment angle (Δα, ΔT) is adjustable.

5. Method according to claim 1, **characterized in that** the misalignment angle (Δα, ΔT) is different for different façades (30, 32, 34).

6. Method according to claim 1, **characterized in that** the angle (Δα, AT) depends on the date and/or time and/or the geographical location of the building (10).

7. Method according to claim 1, **characterized in that** the misalignment angle (Δα, ΔT) is different for the appearance and for the disappearance of the radiation (60).

8. Method according to one of the preceding claims, **characterized in that** the shading devices (20, 22, 24) are controlled depending on a threshold level (Iₜₕᵣₑₛ).

9. Method according to claim 8, **characterized in that** the control of the shading devices (20, 22, 24) is delayed for a delay time (δ_{anticip}) after surpassing the threshold level (Iₜₕᵣₑₛ).

10. Method according to claims 8, **characterized in that** the threshold level (Iₜₕᵣₑₛ) will be changed to a lower threshold level (I_{thres, dis}) at disappearance of the radiation (60).

11. Method according to claim 10, **characterized in that** the control of the shading devices (20, 22, 24) is delayed for a further modified delay time (δ_{anticip, dis}) after passing the lower threshold level (I_{thres, dis}).

12. Method according to claim 10, **characterized in that** the control of the shading devices (20, 22, 24) is delayed for a minimum activation time (Tact) when the future façade radiation intensity (I_{anticip}) has surpassed the threshold level (Iₜₕᵣₑₛ) at appearance of the radiation (60).

13. Method according to one of the claims 8 - 12, **characterized in that** the threshold level (Iₜₕᵣₑₛ) or the lower threshold level (I_{thres, dis}) and/or the modified delay time (δ_{anticip, dis}) or the further modified new delay time (δ_{anticip, dis, thres}) and/or the minimum activation time (T_{act}) depends on the date and/or time and/or the geographical location of the building (10).

14. Method according to one of the preceding claims, **characterized in that** the misalignment angle (Δα, ΔT) is changed to an optimized angle (Δαₒₚₜ) depending on the cooling energy demand and the lighting energy demand of the building (10).

15. Control system for controlling motorized shading devices (20, 22, 24) mounted on a façade (30, 32, 34) of a building (10) based on the radiation (60) of the sun (62), **characterized in that** the control system (40, 50, 52, 54) comprises means (40, 50, 52, 54) to implement the method according to anyone of the preceding claims.

16. Control system according to claim 15, **characterized in that** the control system (40, 50, 52, 54) comprises at least one radiation sensor (50, 52, 54) being associated to the façade (30, 32, 34), which is orientated towards east compared to the orientation of the associated façade (30, 32, 34).

17. Control system according to claim 16, **characterized in that** the radiation sensor (50, 52, 54) comprises means for energy harvesting and/or a means for energy storage.

18. Control system according to claim 16, **characterized in that** the radiation sensor (50, 52, 54) comprises means for wireless signal communication.

19. Control system according to claim 16, **characterized in that** the radiation sensor (50, 52, 54) is mounted on a support (76), which is inclined for the misalignment angle (Δα).

20. Control system according to claim 16, **characterized in that** the sensing device (74) of the radiation sensor (50, 52, 54) can be rotated around an axis for the misalignment angle (Δα).

21. Control system according to claim 16, **characterized in that** the sensing device (74) of the radiation sensor (50, 52, 54) can be moved along a path in order to achieve the misalignment angle (Δα).
